(19)

Europäisches
Patentamt
European
Patent Office
Office européen
des brevets

(11) **EP 4 358 176 A1**

(12) **EUROPEAN PATENT APPLICATION**
published in accordance with Art. 153(4) EPC

(43) Date of publication:
**24.04.2024 Bulletin 2024/17**

(21) Application number: **22949682.3**

(22) Date of filing: **06.07.2022**

(51) International Patent Classification (IPC):
**H01M 4/13** $^{(2010.01)}$

(52) Cooperative Patent Classification (CPC):
**H01M 4/13**

(86) International application number:
**PCT/CN2022/104154**

(87) International publication number:
**WO 2024/007196 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited**
**Ningde, Fujian 352100 (CN)**

(72) Inventors:
• **XU, Xiaofu**
**Ningde, Fujian 352100 (CN)**

• **HE, Jianfu**
**Ningde, Fujian 352100 (CN)**
• **LUO, Chenxu**
**Ningde, Fujian 352100 (CN)**
• **LIU, Qian**
**Ningde, Fujian 352100 (CN)**
• **YE, Yonghuang**
**Ningde, Fujian 352100 (CN)**
• **SHANG, Yibo**
**Ningde, Fujian 352100 (CN)**

(74) Representative: **Gong, Jinping**
**CocreateIP**
**Neumarkterstr. 21**
**81673 München (DE)**

(54) **POSITIVE POLE PIECE, SECONDARY BATTERY, AND ELECTRICAL APPARATUS**

(57) The present disclosure provides a positive electrode plate, a secondary battery, and a powered device. The positive electrode plate may be a positive electrode plate of a wound cell, and includes a waist region provided close to a waist portion and an end region provided away from the waist portion. The waist region is provided with a first positive electrode film, and the end region is provided with a second positive electrode film. The positive electrode plate may be a positive electrode plate for a laminated cell, which includes a central region provided close to a center and an edge region provided away from the center. The central region is provided with a first positive electrode film, and the edge region is provided with a second positive electrode film.

FIG. 1

**Description**

**TECHNICAL FIELD**

The present application relates to the technical field of batteries, in particular to a positive electrode plate, a secondary battery, and a powered device.

**BACKGROUND**

In recent years, with the increasing application range of secondary batteries, secondary batteries are widely used in energy storage power systems such as waterpower systems, firepower systems, wind power systems, and solar power stations, as well as fields such as electric tools, electric bicycles, electric motorcycles, electric vehicles, military equipment, and aerospace. As the secondary batteries have been greatly developed, higher requirements are demanded for its energy density, cycle performance, safety performance, etc.

The related art compensates irreversible sodium loss during the first cycle of charging and discharging in the lithium/sodium ion battery by a lithium/sodium supplement method.

**SUMMARY**

The inventors have found that for a wound cell, the temperature at a cell waist is higher than the temperature at an end when a battery is operating; for a laminated cell, the temperature at a center portion of the cell is higher than the temperature at an edge portion of the cell when the battery is operating. Regions with higher temperatures exhibit higher electrochemical activity than regions with lower temperatures. The regions of high electrochemical activity have a higher rate of lithium ion depletion and a higher degree of irreversible destruction to the positive electrode material.

In view of the above- problems, the present disclosure provides a novel positive electrode plate, a secondary battery, and a powered device, which are described below.

A first aspect of the present disclosure provides a positive electrode plate for a wound cell, which includes a waist region provided close to a waist portion and an end region provided away from the waist portion. A first positive electrode film is disposed in the waist region and a second positive electrode film is disposed in the end region. A first alkali metal ion-providing material and/or a second alkali metal ion-providing material are distributed in the first positive electrode film, the first alkali metal ion-providing material of the first positive electrode film has an irreversible capacity, the second alkali metal ion-providing material of the first positive electrode film has a reversible capacity, the first alkali metal ion-providing material of the first positive electrode film provides alkali metal ions of $P_1$ ppm, and the second alkali metal ion-providing material of the first positive electrode film provides alkali metal ions of $Q_1$ ppm. A first alkali metal ion-providing material and/or a second alkali metal ion-providing material are distributed in the second positive electrode film, the first alkali metal ion-providing material of the second positive electrode film provides an irreversible capacity, the second alkali metal ion-providing material of the second positive electrode film provides a reversible capacity, the first alkali metal ion-providing material of the second positive electrode film provides alkali metal ions of $P_2$ ppm, and the second alkali metal ion-providing material of the second positive electrode film provides alkali metal ions of $Q_2$ ppm. The first positive electrode film and the second positive electrode film satisfy a following relationship $(P_1+Q_1)>(P_2+Q_2)$, where $P_1>0$, $P_2 \geq 0$, $Q_1>0$, and $Q_2>0$.

The positive electrode plate of the above solution is used in a secondary battery, which exhibits one or more improved properties, such as improved cycle life.

A second aspect of the present disclosure provides a positive electrode plate for a laminated cell, which includes a central region provided close to a center of the positive electrode plate and an edge region provided away from the center. a first positive electrode film is disposed in the central region, and a second positive electrode film is disposed in the edge region. A first alkali metal ion-providing material and/or a second alkali metal ion-providing material are distributed in the first positive electrode film, the first alkali metal ion-providing material of the first positive electrode film has an irreversible capacity, the second alkali metal ion-providing material of the first positive electrode film has a reversible capacity, the first alkali metal ion-providing material of the first positive electrode film provides alkali metal ions of $P_1$ ppm, and the second alkali metal ion-providing material of the first positive electrode film provides alkali metal ions of $Q_1$ ppm. A first alkali metal ion-providing material and/or a second alkali metal ion-providing material are distributed in the second positive electrode film, the first alkali metal ion-providing material of the second positive electrode film provides an irreversible capacity, the second alkali metal ion-providing material of the second positive electrode film provides a reversible capacity, the first alkali metal ion-providing material of the second positive electrode film provides alkali metal ions of $P_2$ ppm, and the second alkali metal ion-providing material of the second positive electrode film provides alkali metal ions of $Q_2$ ppm. The first positive electrode film and the second positive electrode film satisfy a relationship $(P_1+Q_1)>(P_2+Q_2)$, where $P_1>0$, $P_2 \geq 0$, $Q_1>0$, and $Q_2>0$.

The positive electrode plate of the above solution is used in a secondary battery, which exhibits one or more improved properties, such as improved cycle life.

In some embodiments, a porosity of the first positive electrode film is greater than a porosity of the second positive electrode film.

In some embodiments, a ratio of the porosity of the first positive electrode film to the porosity of the second positive electrode film is 1.003 to 3: 1.

In some embodiments, the first positive electrode film and the second positive electrode film meet a relationship $(P_1/Q_1)>(P_2/Q_2)$.

In some embodiments, the positive electrode plate has at least one of the following characteristics:

a value of $(P_1/Q_1)$ ranges from 0.1% to 70%;
a value of $(P_2/Q_2)$ ranges from 0 to 70%; or
a value of $(P_1/Q_1)-(P_2/Q_2)$ ranges from 0.1% to 60%.

In some embodiments, the positive electrode plate has at least one of the following features:

$$P_1+Q_1 = 40000 \text{ ppm to } 180000 \text{ ppm};$$

$$P_2+Q_2 = 40000 \text{ ppm to } 180000 \text{ ppm};$$

or

$$(P_1+Q_1):(P_2+Q_2) = (1.001-2):1.$$

In some embodiments, the positive electrode plate has at least one of the following characteristics:

the waist region is a strip-shaped region distributed along a length direction of the positive electrode plate;
the end region is a strip-shaped region distributed along the length direction of the positive electrode plate;
the waist region has a width in a range of 0.05D to 0.95D, where D is a total width of an active substance region of the positive electrode plate;
the end region has a width in a range of 0.05D to 0.95D, where D is a total width of the active substance region of the positive electrode plate;
a total area of the waist region accounts for 5% to 95% of a total area of the active substance region of the positive electrode plate, optionally 50% to 95%; or
a total area of the end region accounts for 5% to 95% of the total area of the active substance region of the positive electrode plate, optionally 5% to 50%.

In some embodiments, the positive electrode plate has at least one of the following characteristics:

the central region has a circle pattern, an ellipse pattern, a polygon pattern or a similar pattern centered on the center of the positive electrode plate;
the edge region is an annular region distributed along an edge of the positive electrode plate;
a total area of the central region accounts for 5% to 95% of a total area of an active substance region of the positive electrode plate, optionally 50% to 95%; or
a total area of the edge region accounts for 5% to 95% of the total area of the active substance region of the positive electrode plate, optionally 5% to 50%.

In some embodiments, the first alkali metal ion-providing material includes at least one of alkali metal nitride, alkali metal oxide, alkali metal oxide/transition metal complex, alkali metal peroxide, peralkali metal oxide, or alkali metal oxycarbide.

In some embodiments, the positive electrode plate has at least one of the following characteristics:

the alkali metal nitride is $A_3N$;
the alkali metal oxide is $A_2O$;
the alkali metal oxide/transition metal complex is $A_2O/M$;

the alkali metal peroxide is $A_2O_2$;

the peralkali metal oxide includes $A_2NiO_2$ and $A_5FeO_4$; or

the alkali metal oxycarbide includes at least one selected from a group consisting of $A_2C_2O_4$, $A_2C_4O_4$, $A_2C_3O_5$, and $A_2C_4O_6$,

where A is alkali metal element, and M is transition metal element.

In some embodiments, the second alkali metal ion-providing material includes at least one of:

an alkali metal ion active material having a layered structure for a secondary battery;
an alkali metal ion active material having an olivine structure for a secondary battery;
an alkali metal ion active material having a spinel structure for a secondary battery; or
an alkali metal ion active material of prussian blue type for a secondary battery.

In some embodiments, the alkali metal is selected from a group consisting of lithium, sodium, or a combination thereof.

In some embodiments, the positive electrode plate includes one waist region and two end regions, and the one waist region is located between the two end regions. A first positive electrode film is disposed in the waist region, and a second positive electrode film is disposed the two end regions.

In a second aspect, the present disclosure provides a secondary battery including the positive electrode plate described in any of the above embodiments.

In a third aspect, the present disclosure provides a powered device including the secondary battery described above.

Advantageous Effects

One or more embodiments of the present disclosure have at least one of the following benefits:

(1) the positive electrode plate is used in a secondary battery, and the battery exhibits an improved cycle life;
(2) the porosity of the waist region of the positive electrode plate is relatively high, which exhibits relatively slow increase of the expansion force.

**BRIEF DESCRIPTION OF DRAWINGS**

FIG. 1 is a schematic diagram showing a positive electrode plate according to an embodiment of the present application.
FIG. 2 is a schematic diagram showing a wound cell according to one embodiment of the present disclosure.
FIG. 3 is a schematic diagram showing a positive electrode plate according to yet another embodiment of the present application.
FIG. 4 is a schematic diagram showing a laminated cell according to one embodiment of the present disclosure.
FIG. 5 is a schematic diagram showing a secondary battery according to an embodiment of the present application.
FIG. 6 is an exploded view of the secondary battery according to the embodiment of the present application shown in FIG. 5.
FIG. 7 is a schematic diagram showing a battery module according to an embodiment of the present application.
FIG. 8 is a schematic diagram showing a battery pack according to an embodiment of the present application.
FIG. 9 is an exploded view of the battery pack according to the embodiment of the present application as shown in FIG. 8.
FIG. 10 is a schematic diagram showing a powered device in which a secondary battery is used as a power source according to an embodiment of the present application.

Reference signs:
1 battery pack; 2 upper box body; 3 lower box body; 4 battery module; 5 secondary battery; 51 casing; 52 electrode assembly; 53 top cover assembly; 100 wound cell; 200 laminated cell; 11 positive electrode plate; 12 negative electrode plate; 13 separator; 500 waist portion; 501 first end; 502 second end; 101 waist region; 201 first end region; 202 second end region; 600 center; 601 central region; 602 edge region.

**DESCRIPTION OF EMBODIMENTS**

Hereinafter, embodiments of a negative active material and a manufacturing method thereof, a positive electrode plate, a negative electrode plate, a secondary battery, a battery module, a battery pack, and a device of the present application are specifically disclosed with reference to the accompanying drawings. However, there may be cases where unnecessary detailed description is omitted. For example, detailed descriptions of well-known matters and repeated descriptions of practically identical structures are omitted. This is to avoid making the following description unnecessarily lengthy to facilitate understanding for those skilled in the art. In addition, the drawings and the following description are provided to enable those skilled in the art to fully understand the present application and are not intended to limit the subject matter recited in the claims.

The "ranges" disclosed herein are defined in terms of lower and upper limits, a given range is defined by selecting a lower limit and an upper limit, and the selected lower and upper limits defines boundaries of a particular range. Ranges defined in this manner may or may not include end values and may be arbitrarily combined, i.e., any lower limit may be combined with any upper limit to form a range. For example, if ranges of 60 to 120 and 80 to 110 are listed for a particular parameter, it is understood that ranges of 60 to 110 and 80 to 120 are also contemplated. In addition, if listed minimum range values are 1 and 2 and if listed maximum range values are 3, 4, and 5, the following ranges are all conceivable: 1 to 3, 1 to 4, 1 to 5, 2 to 3, 2 to 4, and 2 to 5. In the present application, unless otherwise indicated, the numerical range "a to b" represents an abbreviated representation of any real number combination between a and b, where a and b are both real numbers. For example, a numerical range of "0 to 5" indicates that all real numbers between "0 to 5" have been fully included herein, and "0 to 5" is merely a shorthand representation of combinations of these numbers. In addition, when it is stated that a certain parameter is an integer equal to or greater than 2, it is equivalent to disclosing that the parameter is, e.g., an integer of 2, 3, 4, 5, 6, 7, 8, 9, 10, 11, 12, etc.

All embodiments and alternative embodiments of the present application may be combined with each other to form a new technical solution if not specifically stated.

Unless otherwise specified, all the technical features and optional technical features of the present application may be combined with each other to form a new technical solution.

Unless otherwise specified, all steps of the present application may be performed sequentially or may be performed randomly, preferably sequentially. For example, the process includes steps (a) and (b), meaning that the process may include steps (a) and (b) performed sequentially, or may include steps (b) and (a) performed sequentially. For example, the process may further include step (c), meaning that step (c) may be added to the process in any order, e.g., the process may include steps (a), (b), and (c), include steps (a), (c), and (b), or include steps (c), (a), and (b) or the like.

If not specifically stated, "including" and "incorporating" described herein are intended to be open-ended as well as closed-ended. For example, "including" and "comprising" may mean that other components not listed may be included or incorporated, or that only listed components may be included or incorporated.

In the present application, the term "or" is inclusive if not specifically stated. For example, a phrase "A or B" means "A, B, or both A and B". More specifically, a condition of "A or B" is satisfied by any one of the following conditions: A is true (or present) and B is false (or not present); A is false (or absent) and B is true (or present); or both A and B are true (or present).

[Secondary battery]

A secondary battery, also referred to as a rechargeable battery or a storage battery, refers to a battery that may be continuously used by activating an active material by charging after the battery is discharged.

Generally, a secondary battery includes a positive electrode plate, a negative electrode plate, a separator, and an electrolytic solution. During charging and discharging of the battery, active ions, such as lithium ions, are intercalated and deintercalated between the positive electrode plate and the negative electrode plate. The separator is arranged between the positive electrode plate and the negative electrode plate, and mainly functions to prevent the positive and negative electrodes from being short-circuited while enabling the active ions to pass therethrough. The electrolytic solution between the positive electrode plate and the negative electrode plate mainly serves to conduct active ions.

[Negative electrode plate]

The negative electrode plate includes a negative electrode current collector and a negative electrode film disposed on at least one surface of the negative electrode current collector. The negative electrode film includes a negative electrode active material, and the negative electrode active material uses the negative electrode active material of any one of the present disclosure.

As an example, the negative electrode current collector has two surfaces opposite to each other in a thickness direction thereof, and the negative electrode film is disposed on any one or both of the two opposite surfaces of the negative electrode current collector.

In some embodiments, the negative electrode current collector may be a metal foil or a composite current collector. For example, the metal foil is a copper foil. The composite current collector may include a macromolecular material base-layer and a metal layer formed on at least one surface of the macromolecular material base-material. The composite current collector may be formed by forming a metal material (such as, copper, copper alloy, nickel, nickel alloy, titanium, titanium alloy, silver, and silver alloy) on a macromolecular base material (such as, polypropylene (PP), polyethylene terephthalate (PET), polybutylene terephthalate (PBT), polystyrene (PS), and polyethylene (PE)).

In some embodiments, the negative electrode film further optionally includes a binding agent. The binding agent may be selected from one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film further optionally includes a conductive agent. The conductive agent may be selected from one or more of superconducting carbon, acetylene black, carbon black, Ketjen black, carbon dots, carbon nanotubes, graphene, and carbon nanofibers.

In some embodiments, the negative electrode film may optionally include other additives, such as a thickening agent, e.g., sodium carboxymethyl cellulose (CMC-Na).

In some embodiments, the negative electrode plate is prepared as follows. The above components for preparing the negative electrode plate, such as the negative electrode active material, the conductive agent, the binding agent and any other components, are dispersed in a solvent (for example, deionized water) to form negative electrode slurry. The negative electrode slurry is then coated on the negative electrode current collector, and the negative electrode plate is obtained after drying, cold pressing and other processes.

[Positive electrode plate]

A first aspect of the present application provides a positive electrode plate for a wound cell, which includes a waist region near a waist portion and an end region away from the waist portion.

A first positive electrode film is disposed in the waist region, and a second positive electrode film is disposed in the end region.

A first alkali metal ion-providing material and/or a second alkali metal ion-providing material are distributed in the first positive electrode film. The first alkali metal ion-providing material has an irreversible capacity, and the second alkali metal ion-providing material has a reversible capacity. The first alkali metal ion-providing material in the first positive electrode film provides alkali metal ions of $P_1$ ppm, and the second alkali metal ion-providing material provides alkali metal ions of $Q_1$ ppm.

The first alkali metal ion-providing material and/or the second alkali metal ion-providing material are distributed in the second positive electrode film. The first alkali metal ion-providing material provides an irreversible capacity, and the second alkali metal ion-providing material provides a reversible capacity. The first alkali metal ion-providing material in the second positive electrode film provides alkali metal ions of $P_2$ ppm, and the second alkali metal ion-providing material provides alkali metal ions of $Q_2$ ppm.

The first positive electrode film and the second positive electrode film satisfy the following relationship:

$$(P_1 + Q_1) > (P_2 + Q_2),$$

where $P_1 > 0, P_2 \geq 0$, $Q_1 > 0$, and $Q_2 > 0$.

The positive electrode plate of the above embodiment is used for a secondary battery, which exhibits improved cycle life. Without being limited by theory, the reasons for the improvement in cycle life of the battery are analyzed as follows.

The value of $(P_1 + Q_1)$ of the first positive electrode film is relatively large because the first positive electrode film is located in the waist region where the temperature is relatively high and the electrochemical activity is relatively high. The relatively large $(P_1 + Q_1)$ can compensate for the capacity loss caused by insufficient reversible alkali metal ions due to the excessive consumption rate of alkali metal ions in the waist region, to improve the overall cycle life of the cell.

The value of $(P_2 + Q_2)$ in the second positive electrode film is relatively small, since the second positive electrode film is located in the end region where the temperature is relatively low and the electrochemical activity is relatively low. The relatively small $(P_2 + Q_2)$ helps to reduce the overall cost while avoiding the risk of short-circuiting due to the presence of metal dendrites on the anode due to the excessive amount of alkali metal.

In some embodiments, the term "waist portion" is a midpoint of the positive electrode plate of the wound cell in a direction of a winding axis. In the direction of the winding axis, distances from the position of the waist portion to two end positions of the winding axis are equal. The waist region may be symmetrical about the waist portion.

In some embodiments, the term "close to the waist portion" means that the waist region is closer to the waist portion than the end region. The waist region may be adjacent to or cover the waist portion.

In some embodiments, the term "away from the waist portion" means that the end region is further away from the waist portion than the waist region.

In some embodiments, the area of the waist region is 10% to 90% of the area of the positive electrode plate, such as 20% to 80%, 30% to 70%, 40% to 60%, and 50%. In some embodiments, the area of the end region is 10% to 90% of the area of the positive electrode plate, such as 20% to 80%, 30% to 70%, 40% to 60%, and 50%.

In some embodiments, the end region includes a first end section and a second end section. The area of the first end section may be 5% to 45% of the area of the positive electrode plate, such as 10% to 40%, 20% to 30%, and 25%. The area of the second end section may be 5% to 45% of the area of the positive electrode plate, such as 10% to 40%, 20% to 30%, and 25%.

A second aspect of the present disclosure provides a positive electrode plate for a stacked cell, which includes a central region near the center and an edge region away from the center.

The central region is provided with a first positive electrode film, and the edge region is provided with a second positive electrode film.

A first alkali metal ion-providing material and/or a second alkali metal ion-providing material are distributed in the first positive electrode film. The first alkali metal ion-providing material provides an irreversible capacity, and the second alkali metal ion-providing material provides a reversible capacity. The first alkali metal ion-providing material in the first positive electrode film provides alkali metal ions of $P_1$ ppm, and the second alkali metal ion-providing material provides alkali metal ions of $Q_1$ ppm.

The first alkali metal ion-providing material and/or the second alkali metal ion-providing material are distributed in the second positive electrode film. The first alkali metal ion-providing material provides an irreversible capacity, and the second alkali metal ion-providing material provides a reversible capacity. The first alkali metal ion-providing material in the second positive electrode film provides alkali metal ions of $P_2$ ppm, and the second alkali metal ion-providing material provides alkali metal ions of $Q_2$ ppm.

The first positive electrode film and the second positive electrode film satisfy the following relationship:

$$(P_1+Q_1)>(P_2+Q_2)$$

where $P_1>0$, $P_2\geq0$, $Q_1>0$, and $Q_2>0$.

The positive electrode plate of the above solution is used in a secondary battery, which exhibits one or more improved properties, such as improved cycle life.

Without being limited by theory, the reasons for the improvement in battery cycle life are analyzed as follows.

The positive electrode plate of the above scheme is used for a secondary battery, which exhibits improved cycle life. Without being limited by theory, the reasons for the improvement in battery cycle life are analyzed as follows.

The value of $(P_1+Q_1)$ of the first positive electrode film is relatively large because the first positive electrode film is located in the central region where the temperature is relatively high and the electrochemical activity is relatively high. The relatively large $(P_1+Q_1)$ can compensate for the capacity loss caused by insufficient reversible alkali metal ions due to the excessive consumption rate of alkali metal ions in the waist region, to improve the overall cycle life of the cell.

The value of $(P_2+Q_2)$ in the second positive electrode film is relatively small, since the second positive electrode film is located in the edge region where the temperature is relatively low and the electrochemical activity is relatively low. The relatively small $(P_2+Q_2)$ helps to reduce the overall cost while avoiding the risk of short-circuiting due to the presence of metal dendrites on the anode due to the excessive amount of alkali metal.

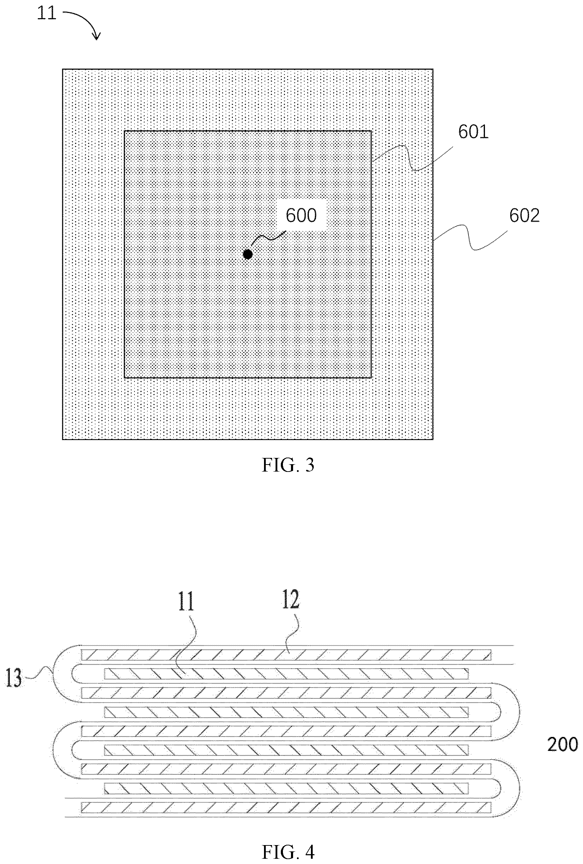

FIG. 3 shows a schematic diagram showing the positive electrode plate of this embodiment. The positive electrode plate 11 has a quadrangular shape. The positive electrode plate 11 includes a central region 601 near a center 600 and an edge region 602 away from the center 600 in a plane direction of the positive electrode plate 11, and the edge region 602 is located outside the central region 601. The central region 601 is quadrilateral in shape. The edge region 602 surrounds a periphery of the central region 601.

FIG. 4 shows a schematic diagram showing a laminated cell of this embodiment. The laminated cell 200 is of a laminated structure. Specifically, the laminated cell 200 includes a plurality of positive electrode plates 11 and a plurality of negative electrode plates 12, the positive electrode plates 11 and the negative electrode plates 12 are alternately laminated, and the separator 13 is located between the positive electrode plate 11 and the negative electrode plate 12. In the laminated structure, the positive electrode plate 11 and the negative electrode plate 12 are both sheet-shaped, and the direction in which the positive electrode plates 11 and the negative electrode plates 12 are laminated is parallel to a thickness direction of the positive electrode plates 11 and a thickness direction of the negative electrode plates 12.

In some embodiments, the term "center" is a geometric center of the positive electrode plates of the laminated cell. The central region may have the same shape and geometric center as the positive electrode plate. The area of the central region may be from 10% to 90% of the area of the positive electrode plate, such as 20% to 80%, 30% to 70%, 40% to 60%, and 50%. The area of the edge region may be 10% to 90% of the area of the positive electrode plate, such as 20% to 80%, 30% to 70%, 40% to 60%, and 50%.

In some embodiments, the term "near the center" means that the center region is closer to the center than the edge region. The central region may be proximate to the center or encompass the center.

In some embodiments, the term "away from center" means that the edge region is farther from the center than the central region.

In some embodiments, the term "first alkali metal ion-providing material" has a first efficiency of 20% or less, e.g., 15% or less, 10% or less, 5% or less, or 1% or less, which have irreversible capacities.

In some embodiments, the term "second alkali metal ion-providing material" has a first efficiency of 80% or more, e.g., 85% or more, 90% or more, 95% or more, or 99% or more, which have reversible capacities.

In some embodiments, the first positive electrode film and the second positive electrode film each have a first alkali metal ion-providing material and/or a second alkali metal ion-providing material independently distributed within the first positive electrode film. The first alkali metal ion-providing material of the first positive electrode film and the first alkali metal ion-providing material of the second positive electrode film may be the same or different materials. The second alkali metal ion-providing material of the first positive electrode film and the second alkali metal ion-providing material of the second positive electrode film may be the same or different materials.

In some embodiments, the term "first efficiency" refers to "Initial Coulombic Efficiency (ICE)". A method for testing the initial coulombic efficiency of the first alkali metal ion-providing material and the second alkali metal ion-providing material refers to methods or standards common in the art. For example, when a material to be tested is used as a positive electrode active material to be assembled into a battery, e.g., a half-battery. A first delithiation capacity C1 and a first lithiation capacity C2 of the material to be tested are measured, then the initial coulombic efficiency = C2/C 1 × 100%.

In some embodiments, a porosity of the first positive electrode film is greater than that of the second positive electrode film. The positive electrode plate of the above solution is used in a secondary battery, which exhibits one or more improved properties, such as improved cycle life.

In some embodiments, a ratio of the porosity of the first positive electrode film to the porosity of the second positive electrode film ranges from 1.003 to 3: 1. The positive electrode plate of the above solution is used in a secondary battery, which exhibits one or more improved properties, such as improved cycle life.

In some embodiments, a ratio of the porosity of the first positive electrode film to the porosity of the second positive electrode film is 1.003 to 1.01: 1, 1.01 to 1.1: 1, 1.1 to 1.2: 1, 1.2 to 1.3: 1, 1.3 to 1.4: 1, 1.4 to 1.5: 1, 1.5 to 1.6: 1, 1.6 to 1.7: 1, 1.7 to 1.8: 1, 1.8 to 1.9: 1, 1.9 to 2: 1, 2 to 2.1: 1, 2.1 to 2.2: 1, 2.2 to 2.3: 1, 2.3 to 2.4: 1, 2.4 to 2.5: 1, 2.5 to 2.6: 1, 2.6 to 2.7: 1, 2.7 to 2.8: 1, 2.8 to 2.9: 1, and 2.9 to 3: 1.

In some embodiments, the first positive electrode film and the second positive electrode film meet a relationship of $(P_1/Q_1)>(P_2/Q_2)$.

The functions of the first alkali metal ion-providing material and/or the second alkali metal ion-providing material during the operation of the battery are different, and the alkali metal ions provided by the first alkali metal ion-providing material are used to compensate for consumption requirements of the alkali metal ions during the life cycle of the battery, such as consumption of an initial film-forming reaction and consumption of a repair film-forming reaction during circulation/storage. The second alkali metal ion-providing material provides alkali metal ions for a reversible deintercalation/electrochemical reaction in the positive and negative electrode materials. More reversible alkali metal ions are used to provide electrochemical energy since the inherent film forming consumption is compensated by the first alkali metal ions.

The value of $(P_1/Q_1)$ of the first positive electrode film is relatively large because the first positive electrode film is located in the waist region where the temperature is relatively high and the electrochemical activity is relatively high. The relatively large $(P_1+Q_1)$ can compensate for the capacity loss caused by insufficient reversible alkali metal ions due to the excessive consumption rate of alkali metal ions in the waist region, to improve the overall cycle life of the cell.

The value of $(P_2+Q_2)$ in the second positive electrode film is relatively small, since the second positive electrode film is located in the end region where the temperature is relatively low and the electrochemical activity is relatively low. The relatively small $(P_2+Q_2)$ helps to reduce the overall cost while avoiding the risk of short-circuiting due to the presence of metal dendrites on the anode due to the excessive amount of alkali metal.

In some embodiments, the positive electrode plate has one or more of the following characteristics:

(1) the value of $(P_1/Q_1)$ ranges from 0.1% to 70%;
(2) the value of $(P_2/Q_2)$ ranges from 0 to 70%;
(3) the value of $(P_1/Q_1)$-$(P_2/Q_2)$ ranges from 0.1% to 70%.

In some embodiments, the value of $(P_1/Q_1)$ ranges from 0.1% to 1%, from 1% to 5%, from 5% to 10%, from 10% to 15%, from 15% to 20%, from 20% to 25%, from 25% to 30%, from 30% to 35%, from 35% to 40%, from 40% to 45%, from 45% to 50%, from 50% to 55%, from 55% to 60%, from 60% to 65%, or from 65% to 70%.

In some embodiments, the value of $(P_2/Q_2)$ ranges from 0% to 0.1%, from 0.1% to 1%, from 1% to 5%, from 5% to 10%, from 10% to 15%, from 15% to 20%, from 20% to 25%, from 25% to 30%, from 30% to 35%, from 35% to 40%, from 40% to 45%, from 45% to 50%, from 50% to 55%, from 55% to 60%, from 60% to 65%, or from 65% to 70%.

In some embodiments, the value of $(P_1/Q_1)-(P_2/Q_2)$ ranges from 0.1% to 1%, from 1% to 5%, from 5% to 10%, from 10% to 15%, from 15% to 20%, from 20% to 25%, from 25% to 30%, from 30% to 35%, from 35% to 40%, from 40% to 45%, from 45% to 50%, from 50% to 55%, from 55 to 60%, from 60% to 65%, or from 65% to 70%.

In some embodiments, the positive electrode plate has one or more of the following characteristics:

(1) the value of $(P_1/Q_1)$ ranges from 10% to 30%;
(2) the value of $(P_2/Q_2)$ ranges from 0 to 10%;
(3) the value of $(P_1/Q_1)-(P_2/Q_2)$ ranges from 10% to 36%.

In some embodiments, the positive electrode plate has one or more of the following characteristics:

$$(1)\ P_1+Q_1 = 40000\ ppm - 180000\ ppm;$$

$$(2)\ P_2+Q_2 = 40000\ ppm - 180000\ ppm;$$

$$(3)\ (P_1+Q_1):(P_2+Q_2) = (1.001\text{-}2):1.$$

In some embodiments, the value of $P_1+Q_1$ ranges from 40000 ppm to 41000 ppm, from 41000 ppm to 45000 ppm, from 40000 ppm to 50000 ppm, from 50000 ppm to 60000 ppm, from 60000 ppm to 70000 ppm, from 70000 ppm to 80000 ppm, from 80000 ppm to 90000 ppm, from 90000 ppm to 100000 ppm, from 100000 ppm to 110000 ppm, from 110000 ppm to 120000 ppm, from 120000 ppm to 130000 ppm, from 130000 ppm to 140000 ppm, from 140000 ppm to 150000 ppm, from 150000 ppm to 160000 ppm, from 160000 ppm to 170000 ppm, from 170000 ppm to 180000 ppm, from 175000 ppm to 18000 ppm, or from 179000 ppm to 18000 ppm.

In some embodiments, the value of $P_2+Q_2$ ranges from 40000 ppm to 41000 ppm, from 41000 ppm to 45000 ppm, from 40000 ppm to 50000 ppm, from 50000 ppm to 60000 ppm, from 60000 ppm to 70000 ppm, from 70000 ppm to 80000 ppm, from 80000 ppm to 90000 ppm, from 90000 ppm to 100000 ppm, from 100000 ppm to 110000 ppm, from 110000 ppm to 120000 ppm, from 120000 ppm to 130000 ppm, from 130000 ppm to 140000 ppm, from 140000 ppm to 150000 ppm, from 150000 ppm to 160000 ppm, from 160000 ppm to 170000 ppm, from 170000 ppm to 180000 ppm, from 175000 ppm to 18000 ppm, or from 179000 to 18000 ppm.

In some embodiments, the value of $(P_1+Q_1):(P_2+Q_2)$ is (1.001-1.01): 1, (1.01-1.02): 1, (1.02-1.03): 1, (1.03-1.04): 1, (1.04-1.05): 1, (1.01-1.1): 1, (1.1-1.2): 1, (1.2-1.3): 1, (1.3-1.4): 1, (1.4-1.5): 1, (1.5-1.6): 1, (1.6-1.7): 1, (1.7-1.8): 1, (1.8-1.9):1, or (1.9-2): 1.

In some embodiments, the positive electrode plate has one or more of the following characteristics:

(1) the waist region is a strip-shaped region distributed along a length direction of the positive electrode plate;
(2) the end region is a strip-shaped region distributed along the length direction of the positive electrode plate;
(3) a width of the waist region is in a range of 0.05 D to 0.95 D, and D is a total width of an active substance region of the positive electrode plate;
(4) a width of the end region is in a range of 0.05 D to 0.95 D, and D is the total width of the active substance region of the positive electrode plate;
(5) a total area of the waist region accounts for 5% to 95% of a total area of the active substance area of the positive electrode plate, optionally 50% to 95%;
(6) a total area of the end region accounts for 5% to 95% of the total area of the active material areas of the positive electrode plate, optionally from 5% to 50%.

In some embodiments, the term "active substance region" refers to a region of the positive electrode plate where the active substance is disposed (e.g., coated). The positive electrode plate may further include a tab region, which is a region where no active substance is provided.

In some embodiments, the width of the waist region ranges from 0.05 D to 0.15 D, from 0.15 D to 0.25 D, from 0.25 D to 0.35 D, from 0.35 D to 0.45 D, from 0.45 D to 0.55 D, from 0.55 D to 0.65 D, from 0.65 D to 0.75 D, from 0.75 D to 0.85 D, or from 0.85 D to 0.95 D.

In some embodiments, the width of the end region ranges from 0.05 D to 0.15 D, from 0.15 D to 0.25 D, from 0.25 D to 0.35 D, from 0.35 D to 0.45 D, from 0.45 D to 0.55 D, from 0.55 D to 0.65 D, from 0.65 D to 0.75 D, from 0.75 D to 0.85 D, or from 0.85 D to 0.95 D.

In some embodiments, the total area of the waist region ranges from 5% to 15%, from 15% to 25%, from 25% to 35%, from 35% to 45%, from 45% to 55%, from 55% to 65%, from 65% to 75%, from 75% to 85%, or from 85% to 95% of the total area of the active substance region of the positive electrode plate.

In some embodiments, the total area of the end region ranges from 5% to 15%, from 15% to 25%, from 25% to 35%, from 35% to 45%, from 45% to 55%, from 55% to 65%, from 65% to 75%, from 75% to 85%, or from 85% to 95% of the total area of the active substance region of the positive electrode plate.

In some embodiments, the positive electrode plate has one or more of the following characteristics:

(1) the central region has a circle pattern, an ellipse pattern, a polygon pattern or a similar pattern centered on the center of the positive electrode plate;
(2) the edge region is an annular region distributed along the edge of the positive electrode plate;
(3) the total area of the central region accounts for 5% to 95% of the total area of the active substance region of the positive electrode plate, optionally 50% to 95%;
(4) the total area of the edge region accounts for 5% to 95% of the total area of the active substance region of the positive electrode plate, optionally from 5% to 50%.

In some embodiments, the total area of the central region ranges from 5% to 15%, from 15% to 25%, from 25% to 35%, from 35% to 45%, from 45% to 55%, from 55% to 65%, from 65% to 75%, from 75% to 85%, or from 85% to 95% of the total area of the active substance region of the positive electrode plate.

In some embodiments, the total area of the edge region ranges from 5% to 15%, from 15% to 25%, from 25% to 35%, from 35% to 45%, from 45% to 55%, from 55% to 65%, from 65% to 75%, from 75% to 85%, or from 85% to 95% of the total area of the active substance region of the positive electrode plate.

In some embodiments, a part or all of the waist region (e.g., a region with an area of 50% to 100% of the waist area, such as 70% to 100 % and 90% to 100 %) is covered by the first positive electrode film.

In some embodiments, a part or all of the end region (e.g., a region with an area of 50% to 100% of the end area, such as 70% to 100 % and 90% to 100%) is covered by the second positive electrode film.

In some embodiments, a part or all of the central region (e.g., 50% to 100 % of the central area, such as 70% to 100 % and 90% to 100 %) is covered by the first positive electrode film.

In some embodiments, a part or all of the edge region (e.g., 50% to 100% of the edge area, such as 70% to 100 % and 90% to 100 %) is covered by the second positive electrode film.

In some embodiments, the first positive electrode film and the second positive electrode film have a substantially same areal density. For example, a ratio of the areal density of the first positive electrode film to the areal density of the second positive electrode film is 0.8-1.2: 1, such as 0.9-1.1: 1 and 1: 1.

In some embodiments, the first alkali metal ion-providing material includes one or more of alkali metal nitride, alkali metal oxide, alkali metal oxide/transition metal complex, alkali metal peroxide, peralkali metal oxide, or alkali metal oxycarbide.

In some embodiments, the positive electrode plate has one or more of the following characteristics:

(1) the alkali metal nitride is $A_3N$;
(2) the alkali metal oxide is $A_2O$;
(3) the alkali metal oxide/transition metal complex is $A_2O/M$;
(4) the alkali metal peroxide is $A_2O_2$;
(5) the peralkali metal oxide includes $A_2NiO_2$ and $A_5FeO_4$;
(6) the alkali metal oxycarbide includes at least one selected from a group consisting of $A_2C_2O_4$, $A_2C_4O_4$, $A_2C_3O_5$, and $A_2C_4O_6$,

where A is an alkali metal element, and M is a transition metal element.

In some embodiments, the second alkali metal ion-providing material includes one or more of:

(1) an alkali metal ion active material of the secondary battery having a layered structure;
(2) an alkali metal ion active material of the secondary battery having an olivine structure;
(3) an alkali metal ion active material of the secondary battery having a spinel structure;
(4) prussian blue type alkali metal ion active material of the secondary battery.

In some embodiments, the alkali metal is selected from a group consisting of lithium, sodium, or a combination thereof.

In some embodiments, the positive electrode plate includes a waist region and two end regions. The waist region is located between the two end regions, the waist region is provided with a first positive electrode film, and each of the two end regions is provided with a second positive electrode film.

In some embodiments, the positive electrode plate of the present disclosure is obtained by providing positive electrode films of different compositions in different regions of the positive electrode plate.

In some embodiments, the positive electrode plate includes a first positive electrode film and a second positive electrode film, and the first positive electrode film and the second positive electrode film are located in different regions of the positive electrode plate and are not laminated to each other. The first positive electrode film and the second positive electrode film each independently include a first alkali metal ion-providing material and/or a second alkali metal ion-providing material, and the first positive electrode film and the second positive electrode film have different compositions.

In some embodiments, the positive electrode plate generally includes a positive electrode current collector and a positive electrode film provided on at least one surface of the positive electrode current collector. The positive electrode film includes a positive electrode active material, which is also referred to as an "alkali metal ion-providing material".

As an example, the positive electrode current collector has two surfaces opposed in a thickness direction thereof, and the positive electrode film is arranged on either or both of the two opposite surfaces of the positive electrode current collector.

In some embodiments, the positive electrode current collector may be a metal foil or a composite current collector. For example, the metal foil is an aluminum foil. The composite current collector may include a macromolecular material base-layer and a metal layer formed on at least one surface of the macromolecular material base-layer. The composite current collector may be formed by forming a metal material (such as, aluminum, aluminum alloy, nickel, nickel alloy, titanium, titanium alloy, silver, and silver alloy) on a macromolecular base material (such as, polypropylene (PP), polyethylene terephthalate (PET), polybutylene terephthalate (PBT), polystyrene (PS), and polyethylene (PE)).

In some embodiments, the positive electrode active material is a positive electrode active material for a battery known in the field. As an example, the positive electrode active material includes at least one of lithium-containing phosphate of an olivine structure, lithium transition metal oxide, or respective modified compounds thereof. However, the present disclosure is not limited to these materials, and other traditional materials that may be used as positive electrode active materials of the battery may be used. These positive electrode active materials may be used alone or in combinations of two or more. Examples of the lithium transition metal oxide may include, but are not limited to, at least one of lithium cobalt oxide (e.g., $LiCoO_2$), lithium nickel oxide (e.g., $LiNiO_2$), lithium manganese oxide (e.g., $LiMnO_2$, $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$, which may be referred to as $NCM_{333}$), $LiNi_{0.5}Co_{0.2}Mn_{0.3}O_2$ (which may be referred to as $NCM_{523}$), $LiNi_{0.5}Co_{0.25}Mn_{0.25}O_2$ (which may be referred to as $NCM_{211}$), $LiNi_{0.6}Co_{0.2}Mn_{0.2}O_2$ (which may be referred to as $NCM_{622}$), $LiNi_{0.8}Co_{0.1}Mn_{0.1}O_2$ (which may be referred to as $NCM_{811}$), lithium nickel cobalt aluminum oxide (e.g., $LiNi_{0.85}Co_{0.15}Al_{0.05}O_2$), or modified compound thereof. Examples of the lithium-containing phosphate of olivine structure may include, but are not limited to, at least one of lithium iron phosphate (such as $LiFePO_4$, which may be referred to as LFP), a composite material of lithium iron phosphate and carbon, lithium manganese phosphate (such as $LiMnPO_4$), a composite material of lithium manganese phosphate and carbon, lithium iron manganese phosphate, or a composite material of lithium iron manganese phosphate and carbon.

In some embodiments, the positive electrode film layer further optionally includes a binding agent. As an example, the binding agent may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, or carbon nanofibers.

In some embodiments, the positive electrode plate is prepared as follows. The above components for preparing the positive electrode plate, such as the positive electrode active material, the conductive agent, the binding agent and any other components, are dispersed in a solvent (e.g., N-methylpyrrolidone) to form positive electrode slurry. The positive electrode slurry is then coated on the positive electrode current collector, and the positive electrode plate is obtained after drying, cold pressing and other processes.

[Electrolyte]

The electrolyte functions to conduct ions between the positive electrode plate and the negative electrode plate. The present disclosure has no specific limitation on the type of the electrolyte, which can be selected according to requirements. For example, the electrolyte may be in a liquid state, a gel state, or an all-solid state.

In some embodiments, the electrolyte is electrolytic solution. The electrolytic solution includes electrolyte salt and a solvent.

In some embodiments, the electrolyte salt may be selected from one or more of lithium hexafluorophosphate, lithium tetrafluoroborate, lithium perchlorate, lithium hexafluoroarsenate, lithium bis (fluorosulfonyl) imide, lithium bis (trifluoromethanesulfonyl) imide, lithium difluorophosphate, lithium difluoro(oxalato)borate, lithium bis(oxalate) borate, lithium difluorobisoxalato phosphate, and lithium tetrafluorooxalate phosphate.

In some embodiments, the solvent may include at least one selected from a group consisting of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfone, methyl ethyl sulfone, and diethyl sulfone.

In some embodiments, the electrolytic solution further optionally includes an additive. As an example, the additive may include a negative electrode film-forming additive and a positive electrode film-forming additive, and may further include additives capable of improving performance of the battery, such as additives for improving overcharge performance of the battery and additives for improving high-temperature or low-temperature performance of the battery.

[Separator]

In some embodiments, the secondary battery further includes an isolation film. The type of the isolation film is not particularly limited in the present disclosure, and may be any well-known isolation film with a porous structure that has good chemical stability and mechanical stability.

In some embodiments, a material of the isolation film may be selected from at least one of glass fiber, non-woven fabric, polyethylene, polypropylene, and polyvinylidene fluoride. The isolation film may be a single-layer film or may be a multilayer composite film, which is not particularly limited. When the isolation film is a multilayer composite film, materials of the layers may be the same or different, which is not particularly limited.

In some embodiments, the positive electrode plate, the negative electrode plate and the isolation film is made into an electrode assembly by means of a winding process or a lamination process.

In some embodiments, the secondary battery may include an outer package. The outer package is configured to package the above electrode assembly and the electrolyte.

In some embodiments, the outer package of the secondary battery may be a hard housing, such as a hard plastic housing, an aluminum housing, and a steel housing. The outer package of the secondary battery may be a soft package, such as a bag-type soft package. A material of the soft package may be plastic, such as polypropylene, polybutylene terephthalate, and polybutylene succinate.

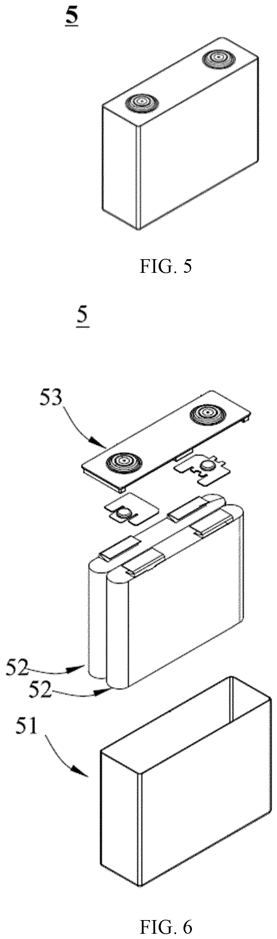

The shape of the secondary battery is not particularly limited in the present disclosure, and may be cylindrical, square, or any other shape. For example, FIG. 5 illustrates a secondary battery 5 having a square structure as an example.

In some embodiments, referring to FIG. 6, the outer package includes a casing 51 and a cover plate 53. The casing 51 includes a bottom plate and a side plate connected to the bottom plate, and the bottom plate and the side plate enclose an accommodating cavity. The casing 51 has an opening in communication with the accommodating cavity, and the cover plate 53 can cover the opening to enclose the accommodating cavity. The positive electrode plate, the negative electrode plate and the isolation film forms an electrode assembly 52 through a winding process or a lamination process. The electrode assembly 52 is enclosed in the accommodating cavity. The electrolyte is immersed in the electrode assembly 52. The secondary battery 5 may include one or more electrode assemblies 52, and those skilled in the art can select according to specific actual requirements.

In some embodiments, the secondary battery may be assembled into a battery module, and the battery module may include one or more secondary batteries, the specific number of which can be selected by those skilled in the art according to the application and a capacity of the battery module.

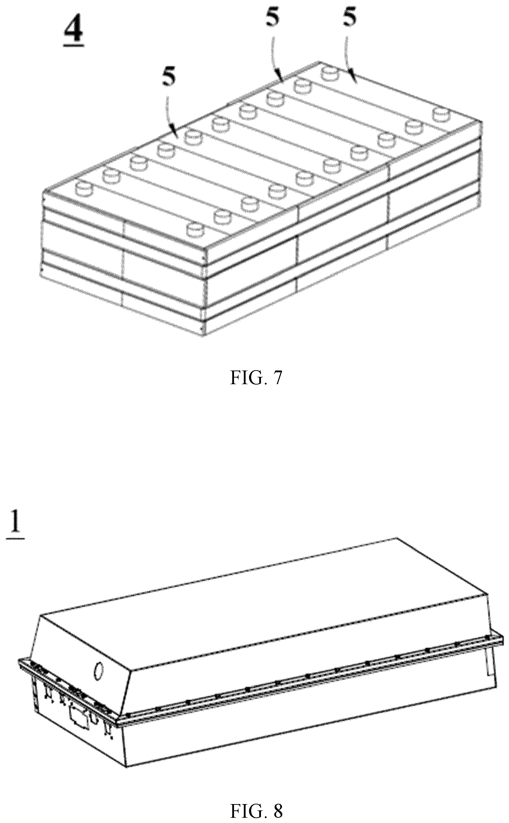

FIG. 7 illustrates a battery module 4 as an example. Referring to FIG. 7, a plurality of secondary batteries 5 of the battery module 4 is sequentially arranged along a length direction of the battery module 4. Alternatively, the secondary batteries may be arranged in any other manner. The plurality of secondary batteries 5 can be further fixed by fasteners.

Alternatively, the battery module 4 may further include a shell having an accommodating space, and the plurality of secondary batteries 5 is accommodated in the accommodating space.

In some embodiments, the above battery modules may be assembled into a battery pack, and the number of the battery modules contained in the battery pack may be one or more, specific number of which can be selected by those skilled in the art according to the application and capacity of the battery pack.

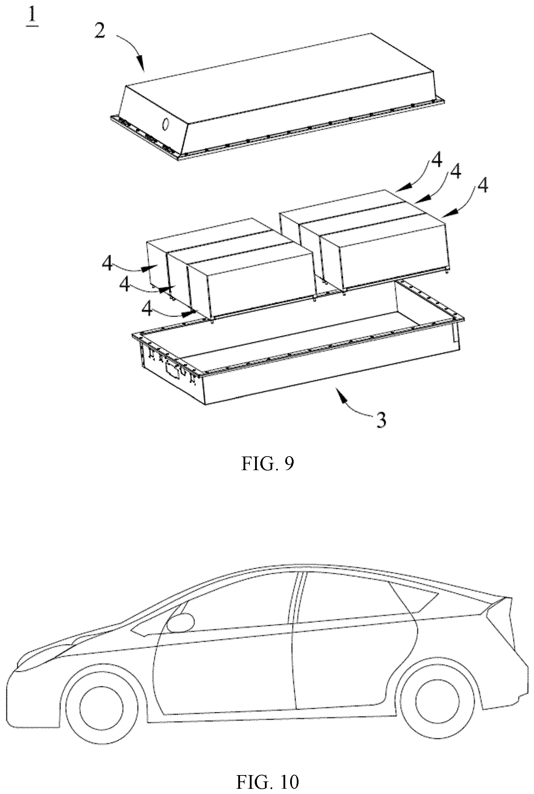

FIG. 8 and FIG. 9 show a battery pack 1 as an example. Referring to FIG. 8 and FIG. 9, the battery pack 1 includes a battery box and a plurality of battery modules 4 provided in the battery box. The battery box includes an upper box body 2 and a lower box body 3, and the upper box body 2 can cover the lower box body 3 to form a closed space for accommodating the battery module 4. The plurality of battery modules 4 may be arranged in the battery box in any manner.

In addition, the present disclosure further provides a powered device, and the powered device includes at least one of the secondary battery, the battery module, or the battery pack according to the present disclosure. The secondary battery, the battery module or the battery pack may be used as a power supply for the powered device, or may be used as an energy storage unit of the powered device. The powered device may include a mobile device (such as a mobile phone and a notebook computer), an electric vehicle (such as a pure electric vehicle, a hybrid electric vehicle, a plug-in hybrid electric vehicle, an electric bicycle, an electric scooter, an electric golf cart, and an electric truck), an electrical train, a ship, a satellite, an energy storage system and the like, but it is not limited thereto.

The powered device may select the secondary battery, the battery module, or the battery pack according to use requirements thereof.

FIG. 10 illustrates a powered device as an example. The powered device is a pure electric vehicle, a hybrid electric vehicle, a plug-in hybrid electric vehicle and the like. In order to meet requirements of the powered device for high power and high energy density of the secondary battery, a battery pack or a battery module can be adopted.

Hereinafter, embodiments of the present application will be described. The embodiments described below are exemplary only and should not be construed as limiting the present application. When specific techniques or conditions are not specified in the examples, they are performed according to techniques or conditions described in the literature in the art or according to the product description. The used reagents or instruments without indicating the manufacturer are common products that can be obtained commercially.

The first alkali metal ion-providing materials of each of the above Embodiments and Comparative Examples have a first efficiency of 20% or less and have irreversible capacities.

The second alkali metal ion-providing materials of the above Embodiments and Comparative Examples have a first efficiency of 80% or more and have reversible capacities.

Embodiment 1

The lithium-ion battery preparation is described below.

1.1 Preparation of Positive Electrode Plate

A first alkali metal ion-providing material (in this embodiment, Li2C404 is used), a second alkali metal ion-providing material (in this embodiment, NCM523 is used), a conductive agent of acetylene black, and a binding agent of polyvinylidene fluoride (PVDF) are mixed uniformly in a mass ratio of 0.1%: 95.9%: 2%: 2%, and are then added to a solvent NMP to prepare a first positive electrode active slurry.

A first alkali metal ion-providing material (in this embodiment, Li2C404 is used), a second alkali metal ion-providing material (in this embodiment, NCM523 is used), a conductive agent of acetylene black (SP), and a binding agent of polyvinylidene fluoride (PVDF) are mixed uniformly in a mass ratio of 0%: 96%: 2%: 2%, and are then added to a solvent NMP to prepare a second positive electrode active slurry.

A positive electrode current collector (such as, aluminum foil) for winding a cell is provided. The positive electrode current collector is in a strip shape, and has a width direction and a length direction. When the cell is subsequently prepared, the width direction of the positive electrode current collector is a winding axis, and the length direction is wound around the winding axis to form a wound cell. In a plane direction of the positive current collector, the positive current collector includes a first end region, a waist region, and a second end region, which extend in a length direction of the positive electrode plate. The waist region is located between the first end region and the second end region. The widths of the first end region, the waist region and the second end region are 0.25 D, 0.5 D, and 0.25 D, respectively, where D is a total width of an active substance region (i.e., an active slurry coated region) of the positive electrode current collector and D is 80 mm.

On a side of the positive electrode current collector, the first positive electrode active slurry is coated in the waist region, the second positive electrode active slurry is coated in the first end region and the second end region, and drying is then performed at 85°C and thereafter cold pressing is performed. The same operation is performed on another side of the positive electrode current collector.

Finally, die-cutting and slitting are performed to obtain a positive electrode plate of a lithium-ion battery used for winding a cell.

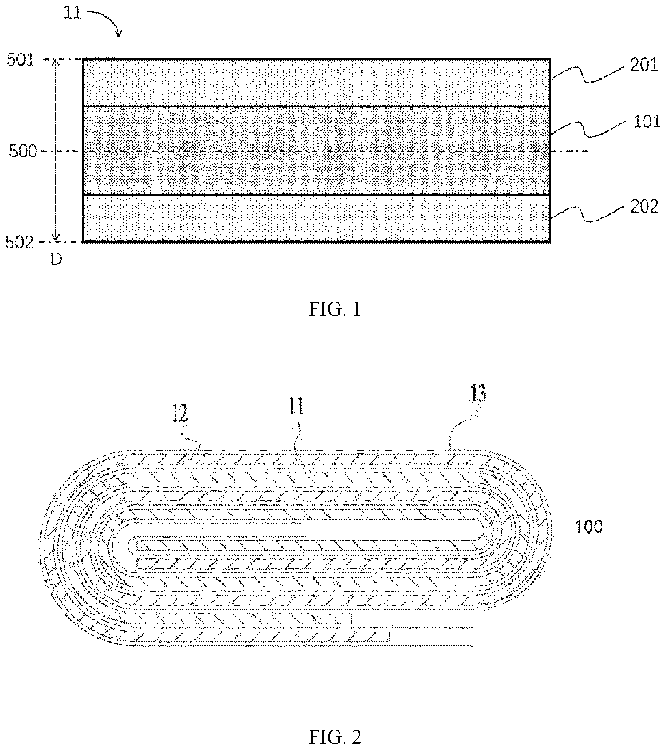

FIG. 1 shows a schematic diagram showing a positive electrode plate for winding a cell according to Embodiment 1. In the width direction of the positive electrode plate 11, the positive electrode plate 11 includes a first end 501, a waist portion 500, and a second end 502. In a plane direction of the positive electrode plate 11, the positive electrode plate 11 includes a first end region 201, a waist region 101, and a second end region 202, which extend in the length direction of the positive electrode plate 11. The waist region 101 is located between the first end region 201 and the second end region 202. The waist region 101 is closer to the waist portion 500 than the first end region 201, and the first end region 201 is farther from the waist portion 500 and closer to the first end 501 than the waist region 101. The waist region 101 is closer to the waist portion 500 than the second end region 202, and the second end region 202 is farther from the waist portion 500 and closer to the second end 502 than the waist region 201. The waist region 101 is provided with a first positive electrode film, and a second positive electrode film is provided in the first end region 201 and the second end region 201, respectively.

The width distribution of the first end region 201, the waist region 101 and the second end region 202 is 0.25 D, 0.5 D, and 0.25 D, and D is a total width of an active substance region of the positive electrode plate 11.

The waist region 101 of the above positive electrode plate is provided with the first positive electrode film. A first alkali metal ion-providing material and a second alkali metal ion-providing material are distributed in the first positive electrode film, and the region has a first activity and hereinafter is also referred to as the first positive electrode film. The first alkali metal ion-providing material has an irreversible capacity, and the second alkali metal ion-providing material has a reversible capacity. The first alkali metal ion-providing material in the first positive electrode film provides alkali metal ions of P1 ppm, and the second alkali metal ion-providing material provides alkali metal ions of Q1 ppm.

The first end region 201 and the second end region 202 of the above positive electrode plate are respectively provided with the second positive electrode film. The second alkali metal ion-providing material is distributed in the second positive electrode film, and the region has a second activity and is hereinafter also referred to as the second positive electrode film. The first alkali metal ion-providing material provides the irreversible capacity, and the second alkali metal ion-providing material provides the reversible capacity. The first alkali metal ion-providing material in the second positive electrode film provides alkali metal ions of P2 ppm, and the second alkali metal ion-providing material provides alkali metal ions of Q2 ppm.

The compositions of the first positive electrode film and the second positive electrode film are shown in Table 1. A sum (P1+Q1) of P1 and Q1 and a ratio (P1/Q1) of P1 to Q1, a sum (P2+Q2) of P2 and Q2 and a ratio (P2/Q2) of P2 to Q2, and a value of (P1+Q1)/(P2+Q2) are shown in Table 1.

1.2 Preparation of Negative Electrode Plate

A negative electrode active material of graphite, a conductive agent of acetylene black, a thickener of carboxymethyl cellulose (CMC) and a binding agent of styrene-butadiene rubber (SBR) are added to the solvent of water in a mass ratio of 96: 2: 1: 1 to be mixed uniformly and prepare a negative electrode slurry. The negative electrode slurry was uniformly coated on the negative electrode current collector of copper foil, dried at 85 °C and then subjected to cold pressing, to prepare a negative electrode plate for a lithium ion battery.

1.3 Preparation of Separator

A microporous polyethylene film is used as a porous separator substrate. Inorganic aluminium trioxide powder, polyvinyl pyrrolidone and an acetone solvent are mixed uniformly in a weight ratio of 3:1.5:5.5 to prepare a slurry, and the slurry is then coated on a surface of the substrate and dried to obtain a separator. The coated surface of the separator subsequently faces toward the positive electrode plate.

1.4 Preparation of Electrolytic Solution

Lithium hexafluorophosphate is dissolved in a mixed solvent of ethylene carbonate, dimethyl carbonate, and methyl ethyl carbonate to obtain an electrolytic solution of the lithium ion battery. The added amount of lithium hexafluorophosphate is 1 mol/L, and the volume ratio of ethylene carbonate, dimethyl carbonate and methyl ethyl carbonate is 1: 2: 1.

1.5 Assembly of Lithium Ion Battery

The positive electrode plate, the negative electrode plate and the separator are wound to obtain a wound cell.

The wound cell is shown in FIG. 2. The wound cell 10 includes a positive electrode plate 11, a negative electrode plate 12, and a separator 13 for separating the positive electrode plate 11 from the negative electrode plate 12. The wound cell 10 has a wound structure. The positive electrode plate 11, the negative electrode plate 12 and the separator 13 are all in a belt shape. The positive electrode plate 11, the separator 13 and the negative electrode plate 12 are sequentially laminated and wound two or more turns to form the wound cell 10. The wound cell 10 has a flat shape.

The wound cell is encapsulated into a battery shell, and is subjected to processes such as liquid injection, formation, and gas exhausting to prepare a battery of the embodiment. The battery has a design rated capacity of 200 Ah, and the size of the battery shell is 60 mm * 200 mm * 100 mm.

Embodiments 2 to 10

Embodiments 2 to 10 differ from Embodiment 1 in that the weight percentages of the first alkali metal ion-providing material (Li2C404) and the second alkali metal ion-providing material (NCM523) in the first positive electrode film are different from those of Embodiment 1 with reference to Table 1.

Comparative Example 1

Comparative Example 1 differs from Embodiment 1 in the composition of the first positive electrode film. Specifically, the content of the first alkali metal ion-providing material (Li2C404) in the first positive electrode film of Comparative Example 1 is 0.0 wt% with reference to Table 1.

Embodiments 11A and 11B, Comparative Examples 2A and 2B

Embodiments 11A and 11B and Comparative Examples 2A and 2B differ from Embodiment 6 in the composition of the first positive electrode film and the second positive electrode film. Specifically, the kind of the second alkali metal ion-providing material is different from that of Embodiment 6 with reference to Table 2.

Embodiments 12 to 19

Embodiments 12 to 29 differ from Embodiment 6 in the composition of the first positive electrode film and the second positive electrode film. Specifically, the kind of the first alkali metal ion-providing material is different from that of Embodiment 6 with reference to Table 3.

Embodiments 20 to 21

Embodiments 20-21 differ from Embodiment 6 in the composition of the second positive electrode film. Specifically, the weight percentages of the first alkali metal ion-providing material (Li2C404) and the second alkali metal ion-providing material (NCM523) in the first positive electrode film are different from those of Embodiment 6 with reference to Table 4.

Comparative Examples 3A to 3C

Comparative Example 3A differs from Embodiment 2 in the composition of the first positive electrode film. Specifically, the first alkali metal ion-providing material (Li2C404) is replaced with a lithium-rich material Li2MnO3·0.15(LiNi0.33Co0.33Mn0.33O2) with reference to Table 5.

Comparative Example 3B differs from Embodiment 5 in the composition of the first positive electrode film. Specifically, the first alkali metal ion-providing material (Li2C404) is replaced with the lithium-rich material Li2MnO3·0.15(LiNi0.33Co0.33Mn0.3302) with reference to Table 5.

Comparative Example 3C differs from Embodiment 6 in the composition of the first positive electrode film. Specifically, the first alkali metal ion-providing material (Li2C404) is replaced with the lithium-rich material Li2MnO3·0.15(LiNi0.33Co0.33Mn0.3302) with reference to Table 5.

A first efficiency of the lithium-rich material is equal to or greater than 90%. The lithium-rich material of the first positive electrode film provides alkali metal ions of P*1 ppm, and the lithium-rich material of the second positive electrode film provides alkali metal ions of P*2 ppm.

Analysis and Test

1. Test of Porosity of Positive Electrode Plate

The test was performed with reference to GB/T 24586-2009, and the positive electrode plates of Embodiments and Comparative Examples were tested by a true density analyzer with an equipment model of AccuPyc II 1340.

1. Testing Principle

the real volume of the tested material was accurately measured by a displacement method with an inert gas (helium) having small molecular diameter in combination with Archimedes principle and Bohr's law (PV = nRT) to obtain a porosity of tested samples.

2. Calculation Equation: apparent volume V2=S *H*A; porosity $\alpha$ = (V2-V1)/V2 $\times$ 100%

S denotes a sample area in cm2, H denotes a sample thickness in cm, A denotes the number of samples in EA, V1 denotes a true volume of the sample in cm3, V2 denotes an apparent volume of sample in cm3, and A denotes a porosity of the sample in %.

The porosities of the waist region and the end region of the positive electrode plates of Embodiments and Comparative Examples are shown in Tables 1 to 5.

2. Testing of Battery Life

A charging-discharging procedure is described below, in which a rated capacity is 200 Ah. In an embodiment of the present disclosure, a potential range used for cycle life test can be adjusted in accordance with system properties. For example, LiNi0.5Co0.2Mn0.3 has a system voltage of V0 to V1 in a range of 2.8 V to 4.3 V, LiFePO4 has a system voltage in a range of 2.5 V to 3.65 V, and LiFe0.4Mn0.6PO4 has a system voltage in a range of 2.5 V to 4.3 V

The testing temperature is 25 °C, and a cycle procedure is as follows:

1) the battery stands for 10 min;
2) the battery is discharged to a cutoff voltage $V_0$ at 0.33 C;
3) the battery stands for 10 min;
4) the battery is charged to target voltage $V_1$ at a constant current of 0.33 C, and is charged at a constant voltage and the cut-off condition is I $\leq$ 0.05 C;
5) the battery stands for 10 min;
6) the battery is discharged to a cutoff voltage $V_0$ at 0.33 C, and a second discharge capacity is recorded as $C_0$;
7) the battery stands for 10 min;
8) steps 4) to 7) are repeated, and the discharge capacity of the cycle test is recorded as $C_m$;
9) the test is ended when $C_m/C_0 \leq 80\%$, and the number of cycles is recorded.

The cell cycle lives of the Embodiments and Comparative Examples is shown in Tables 1 to 5.

3. Material Distribution Information of Positive Electrode Plate

An exemplary testing method is provided below to detect the distribution of the first alkali metal ion-providing material and the second alkali metal ion-providing material of the positive electrode plate.

(1) A positive electrode plate to be tested is provided.
(2) The positive electrode plate to be tested is gride-segmented to obtain a plurality of units to be tested, and position information of each of the units to be tested is recorded. For example, when a grid size of a positive electrode plate of 100 mm $\times$ 1000 mm is set to 5 mm $\times$ 5mm, 4000 units to be tested can be obtained by segmentation.
(3) Physicochemical parameters of each unit to be tested is detected.

The physicochemical parameters include, but are not limited to, (a) elemental composition.

The test of the elemental composition may be carried out with reference to common methods in this art. For example, referring to EPA 6010D-2014, iCAP 7400 inductively coupled plasma emission spectrometer may be used for an element content test, and aqua regia is selected as the solvent.

$$\text{Element content (mass fraction w/w\%)} = \text{element mass/(sample weight-current collector mass)} \times 100\%.$$

The sum $(P_1+Q_1)$ ppm of the alkali metal ion content of the first alkali metal ion-providing material and the alkali metal ion content of the second alkali metal ion-providing material of the first positive electrode film in the waist region and the end region can be determined based on the alkali metal element concentration of each unit to be tested. The sum $(P_2+Q_2)$ ppm of the alkali metal ion content of the first alkali metal ion-providing material and the alkali metal ion content of the second alkali metal ion-providing material in the second positive electrode film.

Table 1

| | Components of First Positive Electrode Film wt% | | | | Component of Second Positive Electrode Film wt% | | | | $P_1/Q_1$ | $P_2/Q_2$ | $P_1+Q_1$ ppm | $P_2+Q_2$ ppm | $(P_1+Q_1)/(P_2+Q_2)$ | $\alpha_1$ % | $\alpha_2$ % | $\alpha_1{:}\alpha_2$ | Cycle Life /Circle |
|---|---|---|---|---|---|---|---|---|---|---|---|---|---|---|---|---|---|
| | NCM523 | $Li_2C_4O_4$ | SP | PVDF | NCM523 | $Li_2C_4O_4$ | SP | PVDF | | | | | | | | | |
| Comparative Example 1 | 96.0% | 0.0% | 2% | 2% | 96.0% | 0.0% | 2% | 2% | 0.0% | 0% | 98140 | 98140 | 1.000 | 32.1% | 32.1% | 1.000 | 1500 |
| Embodiment 1 | 95.9% | 0.1% | 2% | 2% | 96.0% | 0.0% | 2% | 2% | 0.2% | 0% | 98242 | 98140 | 1.001 | 32.2% | 32.1% | 1.003 | 1514 |
| Embodiment 2 | 95.0% | 1.0% | 2% | 2% | 96.0% | 0.0% | 2% | 2% | 2.2% | 0% | 99169 | 98140 | 1.010 | 33.2% | 32.1% | 1.033 | 1640 |
| Embodiment 3 | 94.1% | 1.9% | 2% | 2% | 96.0% | 0.0% | 2% | 2% | 4.3% | 0% | 100218 | 98140 | 1.021 | 34.2% | 32.1% | 1.066 | 1782 |
| Embodiment 4 | 93.1% | 2.9% | 2% | 2% | 96.0% | 0.0% | 2% | 2% | 6.4% | 0% | 101288 | 98140 | 1.032 | 35.3% | 32.1% | 1.099 | 1928 |
| Embodiment 5 | 91.2% | 4.8% | 2% | 2% | 96.0% | 0.0% | 2% | 2% | 10.4% | 0% | 103493 | 98140 | 1.055 | 37.4% | 32.1% | 1.164 | 2088 |
| Embodiment 6 | 86.4% | 9.6% | 2% | 2% | 96.0% | 0.0% | 2% | 2% | 19.7% | 0% | 109413 | 98140 | 1.115 | 42.4% | 32.1% | 1.322 | 2215 |
| Embodiment 7 | 76.8% | 19.2% | 2% | 2% | 96.0% | 0.0% | 2% | 2% | 35.6% | 0% | 123365 | 98140 | 1.257 | 51.9% | 32.1% | 1.619 | 2412 |
| Embodiment 8 | 67.2% | 28.8% | 2% | 2% | 96.0% | 0.0% | 2% | 2% | 48.7% | 0% | 141079 | 98140 | 1.438 | 60.6% | 32.1% | 1.890 | 2068 |
| Embodiment 9 | 57.6% | 38.4% | 2% | 2% | 96.0% | 0.0% | 2% | 2% | 59.6% | 0% | 164314 | 98140 | 1.674 | 68.5% | 32.1% | 2.135 | 1559 |
| Embodiment 10 | 48.0% | 48.0% | 2% | 2% | 96.0% | 0.0% | 2% | 2% | 68.9% | 0% | 196128 | 98140 | 1.998 | 75.6% | 32.1% | 2.354 | 1517 |

\* The abbreviation NCM523 is $LiNi_{0.5}Co_{0.2}Mn_{0.3}$

EP 4 358 176 A1

Table 2

| | Components of First Positive Electrode Film wt% | | | | Component of Second Positive Electrode Film wt% | | | | $P_1/Q_1$ | $P_2/Q_2$ | $P_1+Q_1$ ppm | $(P_2+Q_2)$ ppm | $(P_1+Q_1)/(P_2+Q_2)$ | $\alpha_1$ % | $\alpha_2$ % | $\alpha_1:\alpha_2$ | Cycle Life /Circle |
|---|---|---|---|---|---|---|---|---|---|---|---|---|---|---|---|---|---|
| Comparative Example 2A | $LiFePO_4$ | $Li_2C_4O_4$ | SP | PVDF | $LiFePO_4$ | $Li_2C_4O_4$ | SP | PVDF | 0.0% | 0% | 42231 | 42231 | 1.000 | 34.9% | 34.9% | 1.000 | 3000 |
| | 96% | 0.0% | 2% | 2% | 96% | 0.0% | 2% | 2% | | | | | | | | | |
| Embodiment 11A | $LiFePO_4$ | $Li_2C_4O_4$ | SP | PVDF | $LiFePO_4$ | $Li_2C_4O_4$ | SP | PVDF | 29.7% | 0% | 53752 | 42231 | 1.273 | 44.1% | 34.9% | 1.264 | 4742 |
| | 86.4% | 9.6% | 2% | 2% | 96% | 0.0% | 2% | 2% | | | | | | | | | |
| Comparative Example 2B | LFMP | $Li_2C_4O_4$ | SP | PVDF | LFMP | $Li_2C_4O_4$ | SP | PVDF | 0.0% | 0% | 42378 | 42378 | 1.000 | 34.0% | 34.0% | 1.000 | 2000 |
| | 96% | 0.0% | 2% | 2% | 96% | 0.0% | 2% | 2% | | | | | | | | | |
| Embodiment 11B | LFMP | $Li_2C_4O_4$ | SP | PVDF | LFMP | $Li_2C_4O_4$ | SP | PVDF | 29.7% | 0% | 53898 | 42378 | 1.272 | 43.3% | 34.0% | 1.275 | 3880 |
| | 86.4% | 9.6% | 2% | 2% | 96% | 0.0% | 2% | 2% | | | | | | | | | |
| * The abbreviation LFMP is $LiFe_{0.4}Mn_{0.6}PO_4$ | | | | | | | | | | | | | | | | | |

Table 3

| | Components of First Positive Electrode Film wt% | | | | Component of Second Positive Electrode Film wt% | | | | $P_1/Q_1$ | $P_2/Q_2$ | $P_1+Q_1$ ppm | $(P_2+Q_2)$ ppm | $(P_1+Q_1)/(P_2+Q_2)$ | $\alpha_1$ % | $\alpha_2$ % | $\alpha_1:\alpha_2$ | Cycle Life /Circle |
|---|---|---|---|---|---|---|---|---|---|---|---|---|---|---|---|---|---|
| Embodiment 12 | NCM523 | $Li_2C_2O_4$ | SP | PVDF | NCM523 | $Li_2C_2O_4$ | SP | PVDF | 23.0% | 0% | 112173 | 98140 | 1.143 | 42.1% | 32.1% | 1.311 | 1906 |
| | 86.4% | 9.6% | 2% | 2% | 96% | 0.0% | 2% | 2% | | | | | | | | | |
| Embodiment 13 | NCM523 | $Li_2C_3O_5$ | SP | PVDF | NCM523 | $Li_2C_3O_5$ | SP | PVDF | 19.6% | 0% | 109058 | 98140 | 1.111 | 42.2% | 32.1% | 1.315 | 2196 |
| | 86.4% | 9.6% | 2% | 2% | 96% | 0.0% | 2% | 2% | | | | | | | | | |
| Embodiment 14 | NCM523 | $Li_2C_4O_6$ | SP | PVDF | NCM523 | $Li_2C_4O_6$ | SP | PVDF | 16.4% | 0% | 107041 | 98140 | 1.091 | 42.7% | 32.1% | 1.330 | 2207 |
| | 86.4% | 9.6% | 2% | 2% | 96% | 0.0% | 2% | 2% | | | | | | | | | |
| Embodiment 15 | NCM523 | $Li_3N$ | SP | PVDF | NCM523 | $Li_3N$ | SP | PVDF | 43.9% | 0% | 161210 | 98140 | 1.643 | 42.8% | 32.1% | 1.333 | 2410 |
| | 86.4% | 9.6% | 2% | 2% | 96% | 0.0% | 2% | 2% | | | | | | | | | |
| Embodiment 16 | NCM523 | $Li_2O/Co$ | SP | PVDF | NCM523 | Li2O/Co | SP | PVDF | 28.8% | 0% | 114304 | 98140 | 1.165 | 41.6% | 32.1% | 1.296 | 2182 |
| | 86.4% | 9.6% | 2% | 2% | 96% | 0.0% | 2% | 2% | | | | | | | | | |
| Embodiment 17 | NCM523 | $Li_2O_2$ | SP | PVDF | NCM523 | $Li_2O_2$ | SP | PVDF | 35.8% | 0% | 129841 | 98140 | 1.323 | 42.8% | 32.1% | 1.333 | 2210 |
| | 86.4% | 9.6% | 2% | 2% | 96% | 0.0% | 2% | 2% | | | | | | | | | |
| Embodiment 18 | NCM523 | $Li_2Ni_2O_2$ | SP | PVDF | NCM523 | $Li_2Ni_2O_2$ | SP | PVDF | 16.0% | 0% | 111809 | 98140 | 1.139 | 32.5% | 32.1% | 1.013 | 1910 |
| | 86.4% | 9.6% | 2% | 2% | 96% | 0.0% | 2% | 2% | | | | | | | | | |
| Embodiment 19 | NCM523 | $Li_5FeO_4$ | SP | PVDF | NCM523 | $Li_5FeO_4$ | SP | PVDF | 23.8% | 0% | 121547 | 98140 | 1.239 | 32.5% | 32.1% | 1.012 | 1948 |
| | 86.4% | 9.6% | 2% | 2% | 96% | 0.0% | 2% | 2% | | | | | | | | | |

Table 4

| | Components of First Positive Electrode Film wt% | | | | Component of Second Positive Electrode Film wt% | | | | $P_1/Q_1$ | $P_2/Q_2$ | $P_1+Q_1$ ppm | $P_2+Q_2$ ppm | $(P_1+Q_1)/(P_2+Q_2)$ | $\alpha_1$ % | $\alpha_2$ % | $\alpha_1:\alpha_2$ | Cycle Life /Circle |
|---|---|---|---|---|---|---|---|---|---|---|---|---|---|---|---|---|---|
| | NCM523 | $Li_2C_4O_4$ | SP | PVDF | NCM523 | $Li_2C_4O_4$ | SP | PVDF | | | | | | | | | |
| Embodiment 20 | 86.4% | 9.6% | 2% | 2% | 95.0% | 1.0% | 2% | 2% | 19.7% | 2.0% | 109413 | 99169 | 1.103 | 42.4% | 33.2% | 1.280 | 2292 |
| Embodiment 21 | 86.4% | 9.6% | 2% | 2% | 93.1% | 2.9% | 2% | 2% | 19.7% | 6.4% | 109413 | 101288 | 1.080 | 42.4% | 35.3% | 1.203 | 2405 |

Table 5

| | Components of First Positive Electrode Film wt% | | | | Component of Second Positive Electrode Film wt% | | | | P*i/Qi | P*$_2$/Q$_2$ | P*1+Q1 ppm | P*$_2$+Q$_2$ ppm | (P*$_1$+Q$_1$)/ (P*$_2$+Q$_2$) | α$_1$ % | α$_2$ % | α$_1$:α$_2$ | Cycle Life /Circle |
|---|---|---|---|---|---|---|---|---|---|---|---|---|---|---|---|---|---|
| | NCM523 | Lithium-rich Material | SP | PVDF | NCM523 | Lithium-rich Material | SP | PVDF | | | | | | | | | |
| Comparative Example 3A | 95% | 1.0% | 2% | 2% | 96.0% | 0.0% | 2% | 2% | 1.4% | 0% | 99202 | 98140 | 1.011 | 32.3% | 32.1% | 1.007 | 1431 |
| Comparative Example 3B | 91.2% | 4.8% | 2% | 2% | 96.0% | 0.0% | 2% | 2% | 6.9% | 0% | 103665 | 98140 | 1.056 | 33.3% | 32.1% | 1.038 | 1327 |
| Comparative Example 3C | 86.4% | 9.6% | 2% | 2% | 96.0% | 0.0% | 2% | 2% | 13.5% | 0% | 109776 | 98140 | 1.119 | 34.5% | 32.1% | 1.075 | 1215 |
| * The lithium-rich material is Li$_2$MnO$_3$·0.15(LiNi$_{0.33}$Co$_{0.33}$Mn$_{0.33}$O$_2$) | | | | | | | | | | | | | | | | | |

Analysis on Results of Experimental data and Elaboration on Principle

1. Factors of Lithium Concentration Gradient

In the above embodiments, the positive electrode plate includes the first positive electrode film located at the waist portion and the second positive electrode film located at the end, and the first positive electrode film and the second positive electrode film satisfy a relationship $(P_{1+}Q_1)>(P_2+Q_2)$.

The experimental results show that the batteries of the Examples exhibit improved cycle life.

Embodiments 1 to 10 show that in case of meeting the relationship $(P_1+Q_1)>(P_2+Q_2)$, the values of $(P_1+Q_1):(P_2+Q_2)$ ranged from 1.001 to 1.998 and the batteries all showed improved cycle life. In Comparative Example 1, the battery met a relationship $(P_1+Q_1)=(P_2+Q_2)$, and the cycle life of the battery was not improved.

Embodiments 11A and 11B show that the batteries using various positive electrode active materials all exhibited improved cycle life in a case of meeting the relationship $(P_1+Q_1)>(P_2+Q_2)$. In Comparative Examples 2A and 2B, the batteries met the relationship $(P_1+Q_1)=(P_2+Q_2)$, and the cycle lives of the batteries were not improved.

Embodiments 12 to 19 show that the batteries employing various first alkali metal ion-providing materials all exhibited improved cycle life in a case of meeting the relationship (P1+Q1)>(P2+Q2).

Embodiments 20 and 21 show that the batteries met the relationships (P1+Q1)>(P2+Q2), P1/Q1=20%, and P2/Q2=2%-6%, which all have improved cycle life.

In Comparative Examples 3A to 3C, the first alkali metal ion-providing material was replaced with the lithium-rich material. The lithium-rich material is different from the first alkali metal ion-providing material in that the lithium-rich material has a first efficiency of 90% or more and has a reversible capacity. The batteries of Comparative Examples 5 to 7 also did not exhibit significantly improved cycle life.

The positive electrode plate of the above embodiments is used for a secondary battery, which exhibits improved cycle life. Without being limited by theory, the reasons for the improvement in battery cycle life are analyzed as follows.

The value of (P1+Q1) of the first positive electrode film is relatively large because the first positive electrode film is located in the waist region where the temperature is relatively high and the electrochemical activity is relatively high. The relatively large (P1+Q1) can compensate for the capacity loss caused by insufficient reversible alkali metal ions due to the excessive consumption rate of alkali metal ions in the waist region, to improve the overall cycle life of the cell.

The value of (P2+Q2) in the second positive electrode film is relatively small, since the second positive electrode film is located in the end region where the temperature is relatively low and the electrochemical activity is relatively low. The relatively small (P2+Q2) helps to reduce the overall cost while avoiding the risk of short-circuiting due to the presence of metal dendrites on the anode due to the excessive amount of alkali metal.

2. Factors of Lithium Supplement

In the above embodiment, the first positive electrode film and the second positive electrode film satisfy a relationship (P1/Q1)>(P2/Q2), which exhibits improved cycle life.

Without being limited by theory, the reasons for the improvement in battery cycle life are analyzed as follows.

The functions of the first alkali metal ion-providing material and/or the second alkali metal ion-providing material during the operation of the battery are different, and the alkali metal ions provided by the first alkali metal ion-providing material are used to compensate for consumption requirements of the alkali metal ions during the life cycle of the battery, such as consumption of an initial film-forming reaction and consumption of a repair film-forming reaction during circulation/storage. The second alkali metal ion-providing material provides alkali metal ions for a reversible deintercalation/electrochemical reaction in the positive and negative electrode materials. More reversible alkali metal ions are used to provide electrochemical energy since the inherent film forming consumption is compensated by the first alkali metal ions. The value of $(P_1/Q_1)$ of the first positive electrode film is relatively large because the first positive electrode film is located in the waist region where the temperature is relatively high and the electrochemical activity is relatively high. The relatively large (P1+Q1) can compensate for the capacity loss caused by insufficient reversible alkali metal ions due to the excessive consumption rate of alkali metal ions in the waist region, to improve the overall cycle life of the cell.

The value of (P2+Q2) in the second positive electrode film is relatively small, since the second positive electrode film is located in the end region where the temperature is relatively low and the electrochemical activity is relatively low. The relatively small (P2+Q2) helps to reduce the overall cost while avoiding the risk of short-circuiting due to the presence of metal dendrites on the anode due to the excessive amount of alkali metal.

3. Porosity Factor

In the above embodiments, the positive electrode plate includes a first positive electrode film at the waist portion and a second positive electrode film at the end, and the porosity of the waist portion is greater than those of the first end region and the second end region, respectively. The experimental results show that the batteries of the Embodiments exhibit improved cycle life.

In Comparative Example 1, the waist region, the first end region and the second end region have the same porosity. Experimental results show that the battery does not exhibit improved cycle life.

Without being limited by theory, the theoretical basis for the above-mentioned positive electrode plate to improve the cycle life of the battery is described below.

During the operation of the cell, the swelling degree of the waist region of the cell is greater than that of the end region, which results in that the squeezing degree of the waist region by the cell casing is greater than that of the end region, such that the reflux capacity of the electrolytic solution in the waist region is poor. Further, the long-term squeezed state may result in the deterioration of the porosity of the negative electrode. After the porosity of the long-term compacted negative electrode is reduced, infiltration of the electrolytic solution is insufficient, and the lithiation kinetics of the negative electrode becomes poor, such that the failure mode of lithium precipitation in the middle part of the negative electrode tends to occur in the middle and late stages of the cycle. Therefore, porosity adjustment is performed at the waist region of the positive electrode plate so that the porosity of the waist region is greater than that of the first end region and the second end region, respectively. In this way, it is possible to reserve a space to be subjected to compression in advance, thereby improving a series of adverse conditions caused when the waist region is compressed.

It should be noted that the present disclosure is not limited to the above embodiments. The above embodiments are merely examples, and within the scope of the technical solution of the present disclosure, embodiments having substantially the same constitution as the technical idea and exerting the same function and effect are all included within the technical scope of the present disclosure. In addition, various modifications may be made to the embodiments by those skilled in the art without departing from the spirit of the present disclosure, and other embodiments that are constructed by combining some of the constituent elements of the embodiments are also included in the scope of the present disclosure.

## Claims

1. A positive electrode plate for a wound cell, comprising: at least one waist region close to a waist portion and at least one end region away from the waist portion, wherein

   a first positive electrode film is disposed in the at least one waist region and a second positive electrode film is disposed in the at least one end region;
   a first alkali metal ion-providing material and/or a second alkali metal ion-providing material are distributed in the first positive electrode film, the first alkali metal ion-providing material of the first positive electrode film having an irreversible capacity, the second alkali metal ion-providing material of the first positive electrode film having a reversible capacity, the first alkali metal ion-providing material of the first positive electrode film providing alkali metal ions of $P_1$ ppm, and the second alkali metal ion-providing material of the first positive electrode film providing alkali metal ions of $Q_1$ ppm;
   a first alkali metal ion-providing material and/or a second alkali metal ion-providing material are distributed in the second positive electrode film, the first alkali metal ion-providing material of the second positive electrode film having an irreversible capacity, the second alkali metal ion-providing material of the second positive electrode film having a reversible capacity, the first alkali metal ion-providing material of the second positive electrode film providing alkali metal ions of $P_2$ ppm, and the second alkali metal ion-providing material of the second positive electrode film providing alkali metal ions of $Q_2$ ppm; and
   the first positive electrode film and the second positive electrode film satisfy a relationship $(P_1+Q_1)>(P_2+Q_2)$, wherein $P_1>0$, $P_2\geq0$, $Q_1>0$, and $Q_2>0$.

2. A positive electrode plate for a laminated cell, comprising: a central region close to a center of the positive electrode plate; and an edge region away from the center, wherein

   a first positive electrode film is disposed in the central region and a second positive electrode film is disposed in the edge region;
   a first alkali metal ion-providing material and/or a second alkali metal ion-providing material are distributed in the first positive electrode film, the first alkali metal ion-providing material of the first positive electrode film having an irreversible capacity, the second alkali metal ion-providing material of the first positive electrode film having a reversible capacity, the first alkali metal ion-providing material of the first positive electrode film providing alkali metal ions of $P_1$ ppm, and the second alkali metal ion-providing material of the first positive electrode film providing alkali metal ions of $Q_1$ ppm;

a first alkali metal ion-providing material and/or a second alkali metal ion-providing material are distributed in the second positive electrode film, the first alkali metal ion-providing material of the second positive electrode film having an irreversible capacity, the second alkali metal ion-providing material of the second positive electrode film having a reversible capacity, the first alkali metal ion-providing material of the second positive electrode film providing alkali metal ions of $P_2$ ppm, and the second alkali metal ion-providing material of the second positive electrode film providing alkali metal ions of $Q_2$ ppm; and

the first positive electrode film and the second positive electrode film satisfy a relationship $(P_1+Q_1)>(P_2+Q_2)$, wherein $P_1>0$, $P_2\geq0$, $Q_1>0$, and $Q_2>0$.

3. The positive electrode plate according to claim 1 or 2, wherein a porosity of the first positive electrode film is greater than a porosity of the second positive electrode film.

4. The positive electrode plate according to claim 3, wherein a ratio of the porosity of the first positive electrode film to the porosity of the second positive electrode film is 1.003 to 3: 1.

5. The positive electrode plate according to any one of claims 1 to 4, wherein the first positive electrode film and the second positive electrode film satisfy a relationship $(P_1/Q_1)>(P_2/Q_2)$.

6. The positive electrode plate according to any one of claims 1 to 5, wherein the positive electrode plate has at least one of the following characteristics:

a value of $(P_1/Q_1)$ ranges from 0.1% to 70%;
a value of $(P_2/Q_2)$ ranges from 0 to 70%; or
a value of $(P_1/Q_1)-(P_2/Q_2)$ ranges from 0.1% to 60%.

7. The positive electrode plate according to any one of claims 1 to 6, wherein the positive electrode plate has at least one of the following characteristics:

$$P_1+Q_1 = 40000 \text{ ppm to } 180000 \text{ ppm};$$

$$P_2+Q_2 = 40000 \text{ ppm to } 180000 \text{ ppm};$$

or

$$(P_1+Q_1):(P_2+Q_2) = (1.001-2):1.$$

8. The positive electrode plate according to any one of claims 1 and 3 to 7, wherein the positive electrode plate has at least one of the following characteristics:

the at least one waist region is a strip-shaped region distributed along a length direction of the positive electrode plate;
the at least one end region is a strip-shaped region distributed along the length direction of the positive electrode plate;
the at least one waist region has a width in a range of 0.05D to 0.95D, wherein D is a total width of an active substance region of the positive electrode plate;
the at least one end region has a width in a range of 0.05D to 0.95D, wherein D is a total width of the active substance region of the positive electrode plate;
a total area of the at least one waist region accounts for 5% to 95% of a total area of the active substance region of the positive electrode plate, optionally 50% to 95%; or
a total area of the at least one end region accounts for 5% to 95% of the total area of the active substance region of the positive electrode plate, optionally 5% to 50%.

9. The positive electrode plate according to any one of claims 2 and 3 to 7, wherein the positive electrode plate has at least one of the following characteristics:

the central region has a circle pattern, an ellipse pattern, a polygon pattern, or a similar pattern centered on the center of the positive electrode plate;

the edge region is an annular region distributed along an edge of the positive electrode plate;

a total area of the central region accounts for 5% to 95% of a total area of an active substance region of the positive electrode plate, optionally 50% to 95%; or

a total area of the edge region accounts for 5% to 95% of the total area of the active substance region of the positive electrode plate, optionally 5% to 50%.

10. The positive electrode plate according to any one of claims 1 to 9, wherein the first alkali metal ion-providing material comprises at least one of alkali metal nitride, alkali metal oxide, alkali metal oxide/transition metal complex, alkali metal peroxide, peralkali metal oxide, or alkali metal oxycarbide.

11. The positive electrode plate according to claim 10, wherein the positive electrode plate has at least one of the following characteristics:

the alkali metal nitride is $A_3N$;
the alkali metal oxide is $A_2O$;
the alkali metal oxide/transition metal complex is $A_2O/M$;
the alkali metal peroxide is $A_2O_2$;
the peralkali metal oxide comprises $A_2NiO_2$ and $A_5FeO_4$; or
the alkali metal oxycarbide comprises at least one selected from a group consisting of $A_2C_2O_4$, $A_2C_4O_4$, $A_2C_3O_5$, and $A_2C_4O_6$,
wherein A is alkali metal element, and M is transition metal element.

12. The positive electrode plate according to any one of claims 1 to 11, wherein the second alkali metal ion-providing material comprises at least one of:

an alkali metal ion active material having a layered structure for a secondary battery;
an alkali metal ion active material having an olivine structure for a secondary battery;
an alkali metal ion active material having a spinel structure for a secondary battery; or
an alkali metal ion active material of prussian blue type for a secondary battery.

13. The positive electrode plate of any of claims 1 to 12, wherein the alkali metal is selected from a group consisting of lithium, sodium, or a combination thereof.

14. The positive electrode plate according to any one of claims 1 to 13, wherein the at least one waist region comprises one waist region and the at least one end region comprises two end regions,
wherein the one waist region is located between the two end regions, a first positive electrode film is disposed in the waist region, and a second positive electrode film is disposed in each of the two end regions.

15. A secondary battery, comprising the positive electrode plate according to any one of claims 1 to 14.

16. A powered device, comprising the secondary battery according to claim 15.

FIG. 1

FIG. 2

11

601

602

600

FIG. 3

11    12

13

200

FIG. 4

**5**

FIG. 5

**5**

FIG. 6

FIG. 7

FIG. 8

FIG. 9

FIG. 10

## INTERNATIONAL SEARCH REPORT

| | International application No. |
|---|---|
| | **PCT/CN2022/104154** |

**A. CLASSIFICATION OF SUBJECT MATTER**

H01M 4/13(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 电池, 正极, 正电极, 阴极, 侧边, 边缘, 端部, 周边, 周围, 边沿, 两侧, 中心, 中央, 中部, battery, cathode, positive, side, end, edge, between, center, central, middle, periphery, intermediate

**C. DOCUMENTS CONSIDERED TO BE RELEVANT**

| Category* | Citation of document, with indication, where appropriate, of the relevant passages | Relevant to claim No. |
|---|---|---|
| Y | CN 113140695 A (ZHUHAI COSMX BATTERY CO., LTD.) 20 July 2021 (2021-07-20) description, paragraphs 4-58, and figures 1-3 | 1-16 |
| Y | JP 2018014398 A (ASAHI KASEI CORP.) 25 January 2018 (2018-01-25) description, paragraphs 18-130, and figures 1-10 | 1-16 |
| Y | CN 112615043 A (QINGTAO (KUNSHAN) ENERGY DEVELOPMENT CO., LTD.) 06 April 2021 (2021-04-06) description, paragraphs 5-48, and figure 1 | 1-16 |
| Y | CN 114530575 A (NINGDE AMPEREX TECHNOLOGY LTD.) 24 May 2022 (2022-05-24) description, paragraphs 4-100 | 1-16 |
| A | CN 208045633 U (SHENZHEN QIANHAI YOURONG TECHNOLOGY CO., LTD.) 02 November 2018 (2018-11-02) entire document | 1-16 |
| A | CN 112018397 A (ZHUHAI COSMX BATTERY CO., LTD.) 01 December 2020 (2020-12-01) entire document | 1-16 |
| A | CN 114566610 A (EVE ENERGY CO., LTD.) 31 May 2022 (2022-05-31) entire document | 1-16 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 December 2022** | **21 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/104154** |

**C.     DOCUMENTS CONSIDERED TO BE RELEVANT**

| Category* | Citation of document, with indication, where appropriate, of the relevant passages | Relevant to claim No. |
|---|---|---|
| A | CN 113394375 A (NINGDE AMPEREX TECHNOLOGY LTD.) 14 September 2021 (2021-09-14) <br> entire document | 1-16 |

Form PCT/ISA/210 (second sheet) (January 2015)

EP 4 358 176 A1

**INTERNATIONAL SEARCH REPORT**
Information on patent family members

International application No.

**PCT/CN2022/104154**

| Patent document cited in search report | | | Publication date (day/month/year) | Patent family member(s) | | | Publication date (day/month/year) |
|---|---|---|---|---|---|---|---|
| CN | 113140695 | A | 20 July 2021 | None | | | |
| JP | 2018014398 | A | 25 January 2018 | None | | | |
| CN | 112615043 | A | 06 April 2021 | None | | | |
| CN | 114530575 | A | 24 May 2022 | None | | | |
| CN | 208045633 | U | 02 November 2018 | None | | | |
| CN | 112018397 | A | 01 December 2020 | WO | 2022057666 | A1 | 24 March 2022 |
| CN | 114566610 | A | 31 May 2022 | None | | | |
| CN | 113394375 | A | 14 September 2021 | None | | | |

Form PCT/ISA/210 (patent family annex) (January 2015)